# EUROPÄISCHE PATENTSCHRIFT

(11) **EP 2 591 448 B1**
(45) Veröffentlichungstag und Bekanntmachung des Hinweises auf die Patenterteilung: **08.08.2018**
(21) Anmeldenummer: 11730877.5
(22) Anmeldetag: 04.07.2011
(51) Int. Cl.: G06K 19/077

(54) **VERFAHREN UND VORRICHTUNG ZUM BEFESTIGEN EINES GEGENSTANDES AN EINER OBJEKTOBERFLÄCHE AUS EINEM PORÖSEN ODER FASERIGEN MATERIAL**
METHOD AND DEVICE FOR FASTENING AN ITEM TO AN OBJECT SURFACE MADE OF A POROUS OR FIBROUS MATERIAL
PROCÉDÉ ET DISPOSITIF PERMETTANT DE FIXER UN OBJET SUR LA SURFACE D'UN PRODUIT CONSTITUÉ D'UN MATÉRIAU POREUX OU FIBREUX

(30) Priorität: 05.07.2010 CH 10862010
(43) Veröffentlichungstag der Anmeldung: 15.05.2013
(73) Patentinhaber: Woodwelding AG, 6304 Zug (CH)
(72) Erfinder: AESCHLIMANN, Marcel, CH-2514 Ligerz (CH); LEHMANN, Mario, CH-2353 Les Pommerats (CH); TORRIANI, Laurent, CH-2516 Lamboing (CH)
(74) Vertreter: Frei Patent Attorneys
(86) Internationale Anmeldenummer: PCT/CH2011/000157
(87) Internationale Veröffentlichungsnummer: WO 2012/003595

(56) Entgegenhaltungen:
- WO-A2-2006/119279
- JP-A- S52 127 937

## Beschreibung

### Technisches Gebiet

Die Erfindung betrifft ein Verfahren und eine Vorrichtung zum Befestigen eines Gegenstandes an einer Objektoberfläche aus einem porösen oder faserigen Material, wobei der Gegenstand im wesentlichen flach und insbesondere als Identifikationsträger ausgerüstet ist (z.B. RFID-Tag oder Schild mit optisch lesbarer Identifikations-Markierung) und wobei mindestens diejenige Objektoberfläche, an der der Gegenstand zu befestigen ist, aus dem porösen oder faserigen Material besteht, insbesondere aus Holz oder aus einem Material, das holzähnliche Eigenschaften aufweist und gegebenenfalls aus Holz hergestellt ist (z.B. Spanplatte, Pressholz, Karton).

### Stand der Technik

Es ist bekannt, beispielsweise hölzerne Paletten oder Baumstämme mit Identifikationsplättchen aus beispielsweise Metall oder Kunststoff zu versehen, wobei die Identifikationsplättchen einen integrierten RFID-Chip mit Antenne oder einen aufgedruckten Strichcode aufweisen. Solche Identifikationsplättchen werden beispielsweise mit Hilfe von Nägeln, Schrauben oder Klammern an der hölzernen Oberfläche befestigt, wobei sie für die Befestigung gegebenenfalls Öffnungen aufweisen, oder die Plättchen sind selbst mit einer Mehrzahl von nagelartigen Beinchen ausgerüstet, die in das Holz eingeschlagen werden. Solche Identifikationsplättchen und Verfahren zu deren Befestigung sind beispielsweise beschrieben in den Publikationen FR-2610749 oder FR-2832841. Ein weiteres Verfahren zur Befestigung eines Identifikationsmittels an einem Objekt aus Holz ist beschrieben in der Publikation FR-2928350. In diesem Verfahren wird in dem Objekt eine Kavität vorgesehen, wird der Identifikationsträger in der Kavität positioniert und wird dann die Kavität mit einem verflüssigten, thermoplastischen Kunststoff ausgegossen.

Aus der Publikation WO 2006/119279 ist es auch bekannt, Chips zu Identifikationszwecken an Verpackungen oder Verpackungsmaterial aus Karton anzubringen, wobei die Chips auf einem Klebeband aufgebracht sind, das beispielsweise auch zur Verstärkung der Verpackung dient und mit einem durch Druck und gegebenenfalls durch Hitze aktivierbaren Kleber versehen ist. Zum Aufbringen des Klebebandes wird dieses mit Hilfe einer gegebenenfalls geheizten Rolle auf die Verpackung oder das Verpackungsmaterial gepresst. Voraussetzung dafür ist, dassd die Chips flexibel und hitzebeständig sind (Seite 6).

### Zusammenfassung

Es ist nun die Aufgabe der Erfindung, ein weiteres Verfahren und eine weitere Vorrichtung zu schaffen, die dazu dienen, einen im wesentlichen flachen Gegenstand (insbesondere einen Identifikationsträger) an einem Objekt aus einem porösen oder faserigen Material, insbesondere aus Holz oder aus einem holzähnlichen Material zu befestigen, wobei das erfindungsgemässe Verfahren durchführbar sein soll, ohne den Gegenstand und insbesondere das Identifikationsmitttel, einem Beschädigungsrisiko auszusetzen, und wobei sich das Objekt mit dem nach dem erfindungsgemässen Verfahren befestigten Gegenstand insbesondere eignen soll für eine Handhabung ohne viel Sorgfalt und auch in rauen Witterungsverhältnissen. Ferner soll das erfindungsgemässe Verfahren einfach, insbesondere ohne spezielle Vorbereitung der Objektoberfläche und mit einfachen Hilfsmitteln durchführbar sein und es soll beispielsweise auch für marktübliche Identifikationsträger, beispielsweise in Form von bekannten Identifikationsschildern, anwendbar sein.

Diese Aufgabe wird gelöst durch das Verfahren und die Vorrichtung, wie sie in den unabhängigen Ansprüchen definiert sind. Weitere Ausführungsformen sind in den abhängigen Ansprüchen definiert. Das erfindungsgemässe Verfahren basiert auf einer Verankerung eines thermoplastischen Materials in einer porösen, faserigen oder anders geeignet strukturierten Objektoberfläche durch Anpressen des thermoplastischen Materials an diese Oberfläche und lokales Aufschmelzen des thermoplastischen Materials insbesondere da, wo es gegen die Objektoberfläche gepresst wird, derart, dass das verflüssigte Material durch den Anpressdruck in die poröse oder faserige Struktur der Objektoberfläche eingepresst wird, wo es, wenn es sich wieder verfestigt, eine formschlüssige und gegebenenfalls zusätzlich stoffschlüssige Verankerung in dieser Oberfläche bildet. Für die Verflüssigung des thermoplastischen Materials wird dieses vorzugsweise mit mechanischer Vibration (z.B. Ultraschall) beaufschlagt. Das Prinzip solcher Verfahren ist beispielsweise beschrieben in den Publikationen JPS52127937A, WO 96/01377 und WO 98/42988. Es ist aber auch möglich, für die Verflüssigung des thermoplastischen Materials das für die Pressung verwendete Befestigungswerkzeug für die Verflüssigung gezielt zu heizen (elektrisch oder durch Absorption von elektromagnetischen Wellen, insbesondere Laserlicht) oder durch Erzeugung von Wirbelströmen, wofür das thermoplastische Material mit einem geeigneten Füller auszustatten ist.

Im erfindungsgemässen Verfahren kommt eine Befestigungsfolie zur Anwendung, die mindestens in einem Randbereich einen Thermoplasten aufweist, der insbesondere durch mechanische Vibration (z.B. Ultraschall) verflüssigbar ist, wobei die Befestigungsfolie im Sinne eines einfachen Hilfsmittels vorteilhafterweise eine konstante Dicke aufweist, so dass sie beispielsweise ab Rolle verarbeitet werden kann. Diese Befestigungsfolie kann dabei entweder selbst der zu befestigende Gegenstand sein (in der Befestigungsfolie integrierter Gegenstand), d.h. sie ist beispielsweise selbst ein Identifikationsträger und weist als Identifikationsmittel einen aufgedruckten oder anders darauf angebrachten Strichcode oder eine andere geeignete Markierung auf oder ist mit einer Kombination von aufgedruckter Antenne und RFID-Chip ausgestattet (z.B. auf einer Folienoberfläche aufgebracht oder zwischen zwei laminierten Folienteilen eingeschlossen). Andererseits kann die Befestigungsfolie auch neutral sein und zur Befestigung eines separaten Gegenstandes, beispielsweise eines separaten Identifikationsträgers dienen.

Die oben genannte Befestigungsfolie wird auf der porösen oder faserigen Objektoberfläche positioniert. Dabei wird eine auf einer Folienseite angeordnete (z.B. aufgedruckte oder aufgeklebte) Markierung (z.B. Identifikationsmittel) gegen die Objektoberfläche gerichtet oder ein separater Gegenstand (z.B. Identifikationsträger) wird zwischen die Befestigungsfolie und die Objektoberfläche oder zwischen zwei Befestigungsfolien positioniert. Dann wird die Befestigungsfolie(n) mit Hilfe eines für die Anpressung der Befestigungsfolie und die Zufuhr der Verflüssigungsenergie ausgerüstete Befestigungswerkzeuges lokal gegen die Objektoberfläche gepresst und mindestens teilweise verflüssigt, wobei das Befestigungswerkzeug beispielsweise ein vibrierendes Werkzeug (z.B. Sonotrode eines Ultraschallgerätes) ist. Die Pressung und Verflüssigung wird dabei lokal beschränkt auf einen linienartigen Bereich, der sich mindestes teilweise um den zu befestigenden Gegenstand erstreckt. Dazu weist das Befestigungswerkzeug an seinem distalen Ende ein sich linienartig mindestes teilweise um einen zentralen Bereich erstreckendes, beispielsweise in sich geschlossenes Profil auf, wobei das Profil und der zentrale Bereich derart ausgebildet sind, dass während der Applikation von Druck und Vibration auf die Befestigungsfolie nur das Profil mit der Befestigungsfolie in Berührung steht. Die Form des beispielsweise in sich geschlossenen Profils bzw. des durch das Profil umrissenen, zentralen Bereichs ist an die Form des zu befestigenden Gegenstandes bzw. an die auf der Befestigungsfolie aufgebrachte Markierung angepasst, derart, dass das Werkzeugprofil um den Gegenstand oder die Markierung positionierbar ist, wobei die Befestigungsfolie mindestens stellenweise, vorteilhafterweise überall, bis zur Aussenkante des Profils reichen soll.

Durch die Zuführung der Verflüssigungsenergie, z.B. in Form von Vibrationen, wird die Befestigungsfolie im Bereich des Werkzeugprofils, also mindestens teilweise um einen separaten Gegenstand oder eine auf der Befestigungsfolie aufgebrachte Markierung herum gegen die Objektoberfläche gepresst, wodurch das thermoplastische Material in diesem (Rand-)Bereich mindestens teilweise verflüssigt und in die Objektoberfläche gedrückt wird, während die Befestigungsfolie im zentralen Bereich, in dem der Gegenstand oder die Markierung der Befestigungsfolie positioniert ist, weder dem Einfluss des Pressdruckes noch dem Einfluss der Verflüssigungsenergie ausgesetzt ist und dadurch unverändert, insbesondere unbeschädigt bleibt.

Vorzugsweise weist das Profil des Befestigungswerkzeugs als äusserstes (am weitesten vom zentralen Bereich entferntes) Element eine Schneidekante oder in einer Reihe angeordnete Schneidezähne auf und einen innerhalb der Schneidekante oder Reihe von Schneidezähnen umlaufenden Pressbereich mit einer Pressfläche, wobei die Schneidekante oder Schneidezähne die Pressfläche distal überragen und insbesondere zum Zertrennen oder mindestens Perforieren der Befestigungsfolie dienen, während die Pressfläche insbesondere der Verankerung der Befestigungsfolie in der Objektoberfläche dient. Je nach Material der Objektoberfläche und je nach Ansprüchen an die Befestigung der Befestigungsfolie auf dieser Oberfläche kann auch ein Werkzeugprofil genügen, das nur eine Schneidekante oder Schneidezähne aufweist, wobei dann insbesondere die innere Flanke der Schneidkante oder Schneidzähne als Pressfäche dient. Ein Werkzeugprofil mit Schneidekante oder mit genügend dicht nebeneinander angeordneten Schneidezähnen erlaubt die Verarbeitung von Befestigungsfolien beliebiger Form und Grösse ohne dass nach der Befestigung Folienteile ausserhalb der Verankerungslinie, bzw. ausserhalb des Werkzeugprofils, einseitig an der Objektfläche haftend über diese vorstehen, wo sie unerwünschte Angriffspunkte für eine Zerstörung der Befestigung darstellen könnten. Ferner macht das Werkzeugprofil mit Schneidekante oder entsprechen angeordneten Schneidezähnen eine Verarbeitung von quasi endlosen Folienbändern ab Rolle möglich, ohne dass dazu weitere Vorrichtungsteile zur Abrennung von diskreten Folienstücken von der Rolle vorzusehen wären. Gegebenenfalls mag es vorteilhaft sein, solche Folienbänder für eine Erleichterung der Abtrennung dem Befestigungsprozess in einer vor-perforierten Form zuzuführen. Für die Verarbeitung von vorgeformten Folienstücken mit einem Werkzeug, dessen Profil mehr oder weniger genau an die Folienstücke angepasst ist, kann auch ein Werkzeugprofil ohne Schneidekante verwendet werden.

Ein auf dem Objekt nach dem erfindungsgemässen Verfahren befestigtes Identifikationsmittel, sei es auf oder in der Befestigungsfolie selbst oder auf bzw. in einem separaten Träger angeordnet, ist mindestens auf der einen Seite durch die Befestigungsfolie und durch deren Verankerung im Material der Objektoberfläche nicht nur gut befestigt sondern, wenn die Befestigung rund um das Identifikationsmittel verläuft, auch gegen äussere Einflüsse gut geschützt, denn die Verankerung stellt nicht nur eine mechanische Befestigung sondern auch einen hermetischen Verschluss zwischen der Objektoberfläche und der Befestigungsfolie sowie auch gegebenenfalls zwischen zwei übereinander angeordneten Befestigungsfolien dar.

Selbstverständlich erlaubt das erfindungsgemässe Verfahren nicht nur die Befestigung von Identifikationsträgern auf Objektoberflächen aus porösen oder faserigen Materialien sondern auch eine gleiche Befestigung von anderen, im wesentlichen flachen Gegenständen, die entweder die Befestigungsfolie selbst sind oder separate Gegenstände, die mittels der Befestigungsfolie an der Objektoberfläche befestigt werden. Solche anderen Gegenstände sind beispielsweise Schilder mit anderen als Identifikationsfunktionen (z.B. Preisschilder, Typenschilder mit optischen oder elektronischen Daten, Beipackzettel oder andere Beipackartikel, wie beispielsweise CDs), wobei solche Gegenstände auch an der Aussenseite von Verpackungen aus beispielsweise Holzspan oder unbeschichtetem Karton befestigt werden können.

Für das erfindungsgemässe Verfahren ebenfalls geeignete Objektoberflächen bestehen beispielsweise aus Ziegelstein, Schaumstein, Metallschaum oder aus keramischen Schäumen (z.B. Glas, Isolationsmaterialien, Schmelzefilter).

Die erfindungsgemässe Vorrichtung weist insbesondere das Befestigungswerkzeug auf, das an seiner distalen Stirnfläche das weiter oben bereits beschriebene Profil aufweist und das in an sich bekannter Art und Weise ausgerüstet ist für die Zuführung der Verflüssigungsenergie zu diesem Profil und für die Koppelung an eine Energiequelle. Für verschiedene Formen von zu befestigenden Gegenständen und für Objektoberflächen mit verschiedenen Eigenschaften sind Befestigungswerkzeuge mit entsprechend angepassten Profilen vorzusehen. Das proximale Werkzeugende ist beispielsweise in an sich bekannter Weise für die Ankoppelung an einer Vibrationsquelle (z.B. Ultraschallgenerator gegebenenfalls mit Booster) ausgerüstet, wobei das Werkzeug und das Ankopplungsmittel für eine möglichst verlustfreie Übermittlung der Vibration zum distalen Werkzeugende, also in das Werkzeugprofil auszurüsten sind.

Die erfindungsgemässe Vorrichtung kann die Energiequelle (z.B. Vibrationsquelle) mit umfassen, insbesondere dann, wenn das Werkzeug oder ein Teil davon fest mit dieser Quelle verbunden ist. Ferner kann die Vorrichtung Mittel zum Zufördern von quasi endlosem Folienmaterial und gegebenenfalls Mittel zum Wegfördern von abgetrenntem Folienmaterial aufweisen.

Ein Kit zur Durchführung des erfindungsgemässen Verfahrens weist insbesondere ein Befestigungswerkzeug und Befestigungsfolie auf, wobei Abmessungen der Befestigungsfolie an Abmessungen des Werkzeugprofils angepasst sind. Ferner kann das Kit eine Energiequelle (z.B. Vibrationsquelle) und eine Mehrzahl von Befestigungswerkzeugen mit verschiedenen Werkzeugprofilen aufweisen, wobei alle Befestigungswerkzeuge eines solchen Kits gleich ausgerüstete proximale Enden haben.

Für das erfindungsgemässe Verfahren eignen sich im wesentlichen alle thermoplastischen Kunststofffolien, insbesondere Folien aus beispielsweise ABS, PVC oder Xyrocoll, wobei die Befestigungsfolie vorteilhafterweise nicht dünner ist als etwa 0,8 mm und, insbesondere, wenn sie durch das Verfahren auch zertrennt werden soll, nicht dicker als 3 bis 4 mm, wobei das Befestigungswerkzeug derart auszugestalten ist, dass das Profil um mindestens die Dicke der zu verarbeitenden Befestigungsfolie über einen zentralen Bereich ragt. Für die Befestigung eines von der Befestigungsfolie separaten Gegenstandes eignet sich insbesondere eine flexible und gegebenenfalls etwas elastische Befestigungsfolie oder eine Folie, die quer zu ihrer flächigen Ausdehnung thermisch vorgeformt ist.

Die Vorteile des erfindungsgemässen Verfahrens gegenüber bekannten Befestigungsverfahren für die Befestigung von Identifikationsträgern an Objekten aus einem porösen oder faserigen Material wie beispielsweise aus Holz oder holzähnlichen Materialien bestehen darin, dass die resultierende Befestigung, insbesondere dann, wenn sie rund um den befestigten Gegenstand läuft, auch eine rundum-Abdichtung gegen Feuchtigkeit und andere Umwelteinflüsse darstellt, und dass sich mit der Ausführungsform mit zwei Befestigungsfolien und einem dazwischen angeordneten Identifikationsmittel ein auch gegen das Objekt hermetisch abgedichteter Behälter ergibt. Ein weiterer Vorteil besteht darin, dass insbesondere mit der Ausführungsform, in der die Befestigungsfolie nicht nur in der Objektoberfläche verankert sondern auch zertrennt wird, die Befestigung den äussersten Rand des befestigten Folienstücks betrifft, so dass keine Angriffspunkte entstehen, an denen zwischen die Befestigungsfolie und die Objektoberfläche eingegriffen werden kann, was eine Zerstörung der Befestigung erleichtern würde. Es mag ferner ein Vorteil des erfindungsgemässen Verfahrens sein, dass ein mit einer separaten Befestigungsfolie befestigter Gegenstand nur in einem Randbereich oder gar nicht mit der Befestigungsfolie verbunden wird, das heisst, dass die beiden Elemente nicht durch Lamination miteinander verbunden werden.

### Beschreibung der Figuren

Verfahren und Vorrichtung gemäss Erfindung werden anhand der folgenden Figuren in mehr Detail beschrieben. Dabei zeigen:
- **Figur 1**: ein beispielhaftes Werkzeug zur Durchführung des erfindungsgemässen Verfahrens;
- **Figur 2**: die Befestigung eines separaten Identifikationsträgers mit Hilfe des Werkzeugs gemäss Figur 1 und zweier Befestigungsfolien;
- **Figur 3**: die Befestigung eines separaten Identifikationsträgers mit Hilfe des Werkzeugs gemäss Figur 1 und einer Befestigungsfolie;
- **Figur 4**: die Befestigung eines Identifikationsträgers, der auch als Befestigungsfolie dient, mit Hilfe des Werkzeugs gemäss Figur 1;
- **Figuren 5 bis 7**: beispielhafte Ausführungsformen des Werkzeugprofils;
- **Figur 8**: ein Schema einer Vorrichtung zur kontinuierlichen Durchführung des Verfahrens gemäss Figur 2.

### Detaillierte Beschreibung

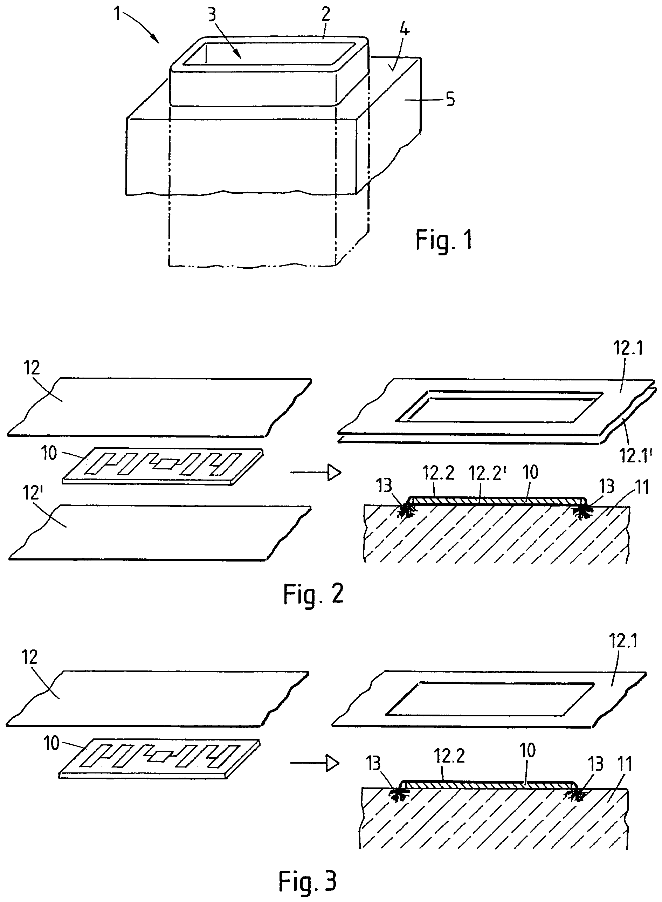

**Figur 1** zeigt den distalen Teil eines Befestigungswerkzeugs 1, das sich zur Durchführung des erfindungsgemässen Verfahrens eignet. Das Werkzeug 1 weist als distalsten Bereich (in Fig. 1 gegen oben gerichtet) ein in sich geschlossen umlaufendes Profil 2 auf, das einen zentralen Bereich 3 rundum umschliesst. Das Profil 2 ist beispielsweise auf einer distalen Fläche 4 eines Werkzeugsockels 5 angeordnet, wobei die distale Fläche 4 nicht nur einen zentralen Bereich innerhalb des Profils 2 sondern auch einen peripheren Bereich ausserhalb des das Profils 2 aufweisen kann und wobei das Profil 2 um mindestens die Dicke einer zu bearbeitenden Befestigungsfolie über die distale Sockelfläche vorstehen muss. Wie strichpunktiert angedeutet, kann das Werkzeug aber auch rohrförmig, das heisst im wesentlichen ohne Werkzeugsockel 5 ausgebildet sein.

Das Werkzeugprofil kann, wie in der Figur 1 gezeigt, ununterbrochen rund um den zentralen Bereich laufen, es kann aber auch regelmässig oder unregelmässig unterbrochen sein oder es kann sich in einer anderen Weise nur teilweise um diesen zentralen Bereich erstrecken.

Üblicherweise wird die vom Werkzeugprofil definierte, zentrale Fläche sowie auch die distale Sockelfläche 4 eben sein. Dies ist aber keine Bedingung des erfindungsgemässen Verfahrens, denn für die Befestigung eines Gegenstandes auf einer nicht ebenen Objektoberfläche wird mindestens die vom Werkzeugprofil definierte innere Fläche an eine Krümmung der Objektoberfläche anzupassen sein.

Das Werkzeug 1 besteht beispielsweise aus einem Metall, beispielsweise aus rostfreiem Stahl.

**Figur 2** illustriert eine beispielhafte Ausführungsform des erfindungsgemässen Verfahrens, nach dem ein separater Gegenstand, z.B. ein mit Antenne und RFID-Chip ausgerüsteter Identifikationsträger 10 in Form eines flachen Plättchens auf einem Objekt 11 befestigt wird. Die Figur zeigt links den Identifikationsträger 10 und zwei für dessen Befestigung verwendete Befestigungsfolien 12 und 12', wobei der Identifikationsträger 10 für die Befestigung zwischen den beiden Befestigungsfolien 12 und 12' angeordnet wird und wobei die beiden Befestigungsfolien vorzugsweise, wie dargestellt, Teile von Folienbändern sind und ab Rolle zugeführt werden aber auch diskrete Folienstücke sein können. Rechts in der Figur 2 ist das Objekt 11 mit dem darauf befestigten Identifikationsträger 10 dargestellt und Folienreste 12.1 und 12.1' aus denen die zur Befestigung des Identifikationsträgers 10 benutzten Folienbereiche 12.2 und 12.2' herausgestanzt sind. Die beiden Folienstücke 12.2 und 12.2' sind rund um den Identifikationsträger 10 in der Objektoberfläche verankert (Verankerungslinie 13) und miteinander verbunden, so dass sie zusammen einen hermetischen Behälter für den Identifikationsträger 10 bilden.

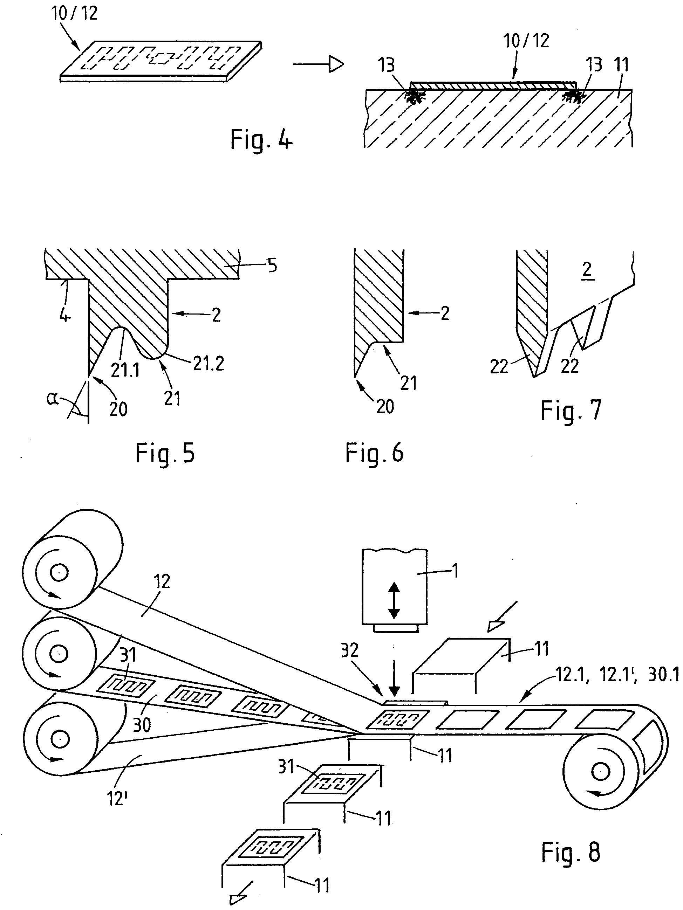

Die beiden im Verfahren gemäss Figur 2 verwendeten Befestigungsfolien 12 und 12' können denselben oder verschiedene Thermoplasten aufweisen oder aus diesen bestehen, wobei verschiedene Thermoplasten derart zu wählen sind, dass sie miteinander verschweissbar sind. Es können auch Folien zur Anwendung kommen, die den Thermoplasten nur in einem Bereich aufweisen, in dem sie in der Objektoberfläche zu verankern sind, das heisst in einem Bereich, in dem das Werkzeugprofil auf sie wirken wird. Es ist auch möglich, das in der Figur 2 dargestellte Verfahren dahingehend abzuändern, dass der Identifikationsträger 10 nicht als diskreter Gegenstand sondern ebenfalls als ein bandförmiger Verbund einer Mehrzahl von Identifikationsträgern zur Anwendung kommt, wobei dann durch das Werkzeugprofil nicht nur aus den Befestigungsfolien sondern auch aus dem bandförmigen Verbund Bereiche ausgestanzt werden (siehe Fig. 8 und entsprechende Beschreibung).

**Figuren 3** **und** **4** zeigen in derselben Darstellungsart wie Figur 2 weitere Ausführungsformen des erfindungsgemässen Verfahrens, wobei gemäss Figur 3 nur eine Befestigungsfolie 12 zur Anwendung kommt und der (separate) Identifikationsträger 10 zwischen der Objektoberfläche und der Befestigungsfolie 12 positioniert wird und wobei gemäss Figur 4 der Identifikationsträger selbst die Befestigungsfolie (10/12) darstellt, also keine separate Befestigungsfolie verwendet wird. Im Verfahren gemäss Figur 3 wird eine oberflächliche Markierung des Identifikationsträgers vorteilhafterweise von der Objektoberfläche weg gerichtet, im Verfahren gemäss Figur 4 vorteilhafterweise gegen die Objektoberfläche.

Alle im Zusammenhang mit der Figur 2 beschriebenen Verfahrensvarianten und vorteilhaften Ausgestaltungen sind in geeigneter Weise angepasst auch auf die Verfahren gemäss Figuren 3 und 4 anwendbar.

Die Verfahren gemäss Figuren 2 und 3 eignen sich insbesondere für die Verarbeitung von Folienbändern mit aufgedruckten Markierungen oder Antennen in Kombination mit aufmontierten integrierten Schaltungen, wie sie bekannterweise hergestellt werden für die verschiedensten Anwendungen, wobei die Folien sehr dünn (z.B. 0,1 bis 0,2 mm) sind und dem Identifikationsmittel weder einen genügenden Schutz bieten können noch genügend thermoplastisches Material aufweisen für eine befriedigende Verankerung in der Objektoberfläche. Diese Funktionen werden dann übernommen von der separaten Befestigungsfolie, die vorteilhafterweise 0,8 bis 4 mm dick ist.

**Figuren 5 bis 7** zeigen verschiedene für das erfindungsgemässe Verfahren geeignete Werkzeugprofile 2 im Querschnitt, wobei das distale Ende gegen unten gerichtet ist und wobei das Profil 2 jeweils mit rechts davon angeordnetem zentralem Bereich und links davon angeordnetem peripherem Bereich dargestellt ist.

Das Werkzeugprofil gemäss Figur 5 überragt einen Werkzeugsockel 5 und weist auf seiner Aussenseite eine Schneidekante 20 und innerhalb der Schneidekante und an diese unmittelbar anschliessend eine Pressfläche 21 auf, wobei die Pressfläche einen an die Schneidekante anschliessenden konvexen Bereich 21.1 und einen an den konvexen Bereich anschliessenden konkaven Bereich 21.2 aufweist. Die Schneidekante 20 hat einen Schneidewinkel α von vorteilhafterweise weniger als 60°, vorteilhafterweise 20 bis 40°, und überragt die Pressfläche 21 um mindestens 0,5 mm. Die Distanz zwischen der distalen Sockelfläche 4 und der Schneidekante 20 ist grösser als die Dicke der zu verarbeitenden Folie oder der Summe der Dicken der zu verarbeitenden Folien um mindestens 0,5 mm. Die gesamte Breite der Pressfläche 21 beträgt beispielsweise 2 mm.

Eine mit dem Werkzeugprofil gemäss Figur 5 erstellte Verankerung einer Befestigungsfolie ist ausgeprägt im Bereich der Pressfläche 21 (insbesondere im Bereich des konvexen Bereichs der Pressfläche) und weniger ausgeprägt im Bereich der Innenfläche der Schneidekante 20, wobei die Schneidekante 20 einen makroskopischen Graben in der Objektoberfäche hinterlassen kann und wobei die Befestigungsfolie in diesem Bereich sauber durchschnitten ist.

Das Werkzeugprofil 2 gemäss Figur 6 weist, wie das Werkzeugprofil 2 gemäss Figur 5 eine Schneidekante 20 und eine innerhalb der Schneidekante 20 angeordnete Pressfläche 21 auf, wobei die Pressfläche im wesentlichen eben ist.

Figur 7 zeigt ein Werkzeugprofil 2, das anstelle einer Schneidekante eine Reihe von Schneidzähnen 22 und keine separate Pressfläche aufweist, bei dem also die Flanken der Schneidzähne 22 als Pressflächen wirken. Je nach Abstand zwischen den Schneidzähnen 22 wirken diese gleich wie eine Schneidekante als Trennmittel zur Abtrennung der Befestigungsfolie. Bei grösserem Abstand zwischen den Schneidzähnen 22 können diese die Befestigungsfolie nur noch perforieren, was aber gegebenenfalls durch nachtägliche Krafteinwirkung trotzdem zu einer vollständigen Abtrennung der Befestigungsfolie führen kann. In jedem Falle wird die Folie im Bereiche der Flanken der Schneidezähne 22 in der Objektoberfläche verankert, vorausgesetzt, dass Werkzeugprofil, Objektoberfläche und Presskraft derart aufeinander abgestimmt sind, dass die Schneidezähne mit Hilfe der Presskraft in das Objektoberflächenmaterial eingedrückt wird. Dabei ist im Bereich einer steileren Flanke weniger Verankerung zu erwarten als im Bereich einer weniger steilen Flanke, was natürlich auch für die Flanken einer Schneidkante gilt. Stumpfere Schneidekanten oder -zähne können gegebenenfalls auch verwendet werden, um eine entsprechende Befestigungsfolie ohne eine Trennung oder Perforierung nur verankern.

**Figur 8** zeigt sehr schematisch eine Vorrichtung zur Durchführung des erfindungsgemässen Verfahrens, wobei in dem Verfahren ähnlich wie in der Figur 2 gezeigt, zwei Bänder von Befestigungsfolien 12 und 12' und ein Folienband 30 mit darauf angeordneten diskreten Identifikationsmitteln 31 beispielsweise ab Rolle intermittierend zu einer Verarbeitungsstelle 32 zugeführt werden. Die Objekte 11 werden beispielsweise quer zur Zuführungsrichtung der Folienbänder ebenfalls der Verarbeitungsstelle 32 zugeführt, wobei die Zuführung der Folienbänder 12, 12' und 30 und der Objekte 11 derart mit einer alternierenden Bewegung des Werkzeuges 1 synchronisiert ist, dass in jedem Takt ein Identifikationsmittel 31 zwischen zwei Bereichen von Befestigungsfolien 12 und 12' auf einem Objekt 11 positioniert und mit dem Werkzeug 1 befestigt werden. Von der Verarbeitungsstelle 32 abgeführt werden die mit Identifikationsmitteln 31 ausgestatteten Objekte 11 und die ausgestanzten Folienbahnen 12.1, 12.1' und 30.1.

### Beispiel:

Befestigungsfolien aus ABS, PVC oder Xyrocoll mit Dicken von 1 mm, 1,2 mm oder 2x1,2 mm wurden mit einem Werkzeugprofil wie in Figur 5 dargestellt auf massivem Fichtenholz (stirnseitig) oder Pressholz, wie es für Palettenklötze zur Anwendung kommt, befestigt und ausgestanzt. Die Rundumlänge des Profils betrug ca. 300 mm und die gesamte Profilbreite etwa 3 mm. Für die Befestigung wurde ein Ultraschallgerät der Firma Telsonic (Typus UPS 3000, Frequenz 20kHz, Leistung 4kW, Booster 1:2, axiale Amplitude am distalen Werkzeugende ca. 60µm) verwendet, wobei der Befestigungsprozess weg-gesteuert wurde. Für die sichere Positionierung der Folien zwischen Objekt und Befestigungswerkzeug wurde eine Vorkraft von 200 bis 300 N (etwa 1 N pro mm Profillänge) angewendet. Dann wurde auf eine Presskraft von 1300 bis 1800 N (etwa 6 N pro mm Profillänge) erhöht und gleichzeitig die Vibration gestartet. Die Vibration wurde gestoppt bei einem Vorschub des Werkzeuges, der nur wenig grösser war als die Dicke der Befestigungsfolien, sicher aber kleiner als der Vorsprung des Werkzeugprofils über die distale Fläche des Werkzeugsockels. Die Presskraft wurde nach Abbrechen der Vibration noch über eine kurze Zeit aufrechterhalten, bevor das Werkzeug vom Objekt entfernt wurde. Der gesamte Befestigungsvorgang war in 1 bis 5 sec. abgeschlossen.

Es zeigt sich, dass Vorkraft und Presskraft nicht nur auf die Profillänge und Profilbreite abzustimmen sind sondern auch auf die Härte der Objektoberfläche und auf Dicke und Schmelzeigenschaften der Befestigungsfolie.

## Patentansprüche

1. Verfahren zur Befestigung eines im wesentlichen flachen Gegenstandes an einer Objektoberfläche aus einem porösen oder faserigen Material, insbesondere aus Holz oder aus einem holzähnlichen Material, mit Hilfe eines verflüssigbaren Thermoplasten und eines Befestigungswerkzeugs (1), wobei eine Befestigungsfolie (12, 12') den Thermoplasten aufweist, wobei der zu befestigende Gegenstand separat von der Befestigungsfolie (12, 12') oder in die Befestigungsfolie integriert ist, wobei das Befestigungswerkzeug (1) ein distales Profil (2) aufweist, das zur Zuführung von zur lokalen Verflüssigung des Thermoplasten geeigneter Energie zu diesem Profil ausgerüstet ist, wobei die Befestigungsfolie und gegebenenfalls der separate Gegenstand auf der Objektoberfläche positioniert wird, wobei das Profil (2) des Befestigungswerkzeugs (1) auf der Befestigungsfolie positioniert und gegen die Objektoberfläche gedrückt und gleichzeitig mit der Energie beaufschlagt wird, bis eine genügende Menge des Thermoplasten durch das Profil (2) verflüssigt und in das Material der Objektoberfläche eingedrungen ist, um die Befestigungsfolie in dieser zu verankern, **gekennzeichnet dadurch, dass** das distale Profil (2) des Befestigungswerkzeugs (1) linienartig an den Gegenstand oder an die Befestigungsfolie angepasst verläuft.

2. Verfahren nach Anspruch 1, wobei das Profil (2) eine in sich geschlossene Form aufweist.

3. Verfahren nach einem der Ansprüche 1 oder 2, wobei das Profil (2) distal über eine distale Fläche (4) eines Werkzeugsockels (5) ragt oder das Befestigungswerkzeug (1) rohrförmig ist und das Profil (2) die distale Stirnseite des rohrförmigen Befestigungswerkzeugs (1) bildet.

4. Verfahren nach einem der Ansprüche 1 bis 3, wobei die Energie mechanische Vibrationsenergie ist.

5. Verfahren nach einem der Ansprüche 1 bis 4, wobei die Befestigungsfolie (12. 12') und gegebenenfalls auch der Gegenstand durch das Profil (2) des Befestigungswerkzeugs (1) zusätzlich entlang des Profils (2) zertrennt wird.

6. Verfahren nach einem der Ansprüche 1 bis 5, wobei der zu befestigende Gegenstand von der Befestigungsfolie (12, 12') separat ist und wobei eine Befestigungsfolie (12) über dem Gegenstand oder eine Befestigungsfolie (12) über und eine weitere Befestigungsfolie (12') unter dem Gegenstand positioniert wird.

7. Verfahren nach einem der Ansprüche 1 bis 6, wobei der zu befestigende Gegenstand ein Identifikationsträger (10) oder ein in der Befestigungsfolie integriertes Identifikationsmittel (31) ist.

8. Verfahren nach einem der Ansprüche 5 bis 7, wobei die Befestigungsfolie und/oder gegebenenfalls eine Mehrzahl von separaten Gegenständen in Form von Folienbändern in einer Folge einer Mehrzahl von Befestigungsschritten auf einer Mehrzahl von Objekten (11) befestigt und ausgestanzt werden.

9. Befestigungswerkzeug (1) konfiguriert zur Durchführung des Verfahrens nach einem der Ansprüche 1 bis 8, **gekennzeichnet dadurch, dass** ein distales Profil (2) des Befestigungswerkzeugs (1) linienartig an einen Gegenstand oder an eine Befestigungsfolie angepasst verläuft.

10. Befestigungswerkzeug (1) nach Anspruch 9, wobei das Profil (2) in sich geschlossen rund um den zentralen Bereich verläuft.

11. Befestigungswerkzeug (1) nach Anspruch 9 oder 10, wobei das Profil (2) distal über eine distale Fläche (4) eines Werkzeugsockels (5) ragt oder das Befestigungswerkzeug (1) rohrförmig ist und das Profil (2) die distale Stirnseite des rohrförmigen Befestigungswerkzeugs (1) bildet.

12. Befestigungswerkzeug nach einem der Ansprüche 9 bis 11, wobei das Profil (2) aussen eine Schneidekante (20) oder eine Reihe von Schneidzähnen (22) aufweist.

13. Befestigungswerkzeug nach Anspruch 12, wobei innen an die Schneidekante (20) oder and die Schneidezähne (22) anschliessend eine Pressfläche (21) angeordnet ist und wobei die Schneidekante (20) oder die Schneidzähne (22) die Pressfläche (21) distal überragen.

14. Kit mit einem Befestigungswerkzeug (1) nach einem der Ansprüche 9 bis 13, wobei das Kit weiter eine Befestigungsfolie oder Befestigungsfolien aufweist mit Abmessungen, die mindestens teilweise an das Profil (2) des Befestigungswerkzeugs (1) angepasst sind.

15. Kit nach Anspruch 14, das ferner eine Energiequelle aufweist, sowie eine Mehrzahl von Befgestigungswerkzeugen (1), die für eine Ankoppelung an die Energiequelle ein gleich ausgerüstetes proximales Ende und verschiedene Profile (2) am distalen Ende aufweisen.

## Claims

1. A method for fastening an essentially flat object to an object surface of a porous or fibrous material, in particular of wood or of a wood-like material, with the help of a liquefiable thermoplastic and a fastening tool (1), wherein a fastening film (12, 12') comprises the thermoplastic, wherein the object to be fastened is separate from the fastening film (12, 12') or is integrated into the fastening film, wherein the fastening tool (1) has a distal profile (2) which is designed for feeding energy suitable for the local liquefaction of the thermoplastic, to this profile, wherein the fastening film and, as the case may be, the separate object is/are positioned on the object surface, wherein the profile (2) of the fastening tool (1) is positioned on the fastening film and is pressed against the object surface and simultaneously subjected to the energy, until a sufficient quantity of the thermoplastic is liquefied by the profile (2) and has penetrated into the material of the object surface, in order to anchor the fastening film in this surface, **characterized in that** the distal profile (2) of the fastening tool (1) runs linearly in a manner adapted to the object or to the fastening film.

2. A method according to claim 1, wherein the profile (2) comprises a closed shape.

3. A method according to one of the claims 1 or 2, wherein the profile (2) projects distally beyond a distal surface (4) of a tool base (5), or the fastening tool (1) is tubular and the profile forms (2) the distal face side of the tubular fastening tool (1).

4. A method according to one of the claims 1 to 3, wherein the energy is mechanical vibration energy.

5. A method according to one of the claims 1 to 4, wherein the fastening film (12, 12') and, if applicable, also the object, is additionally separated along the profile (2) by way of the profile (2) of the fastening tool (1).

6. A method according to one of the claims 1 to 5, wherein the object to be fastened is separate from the fastening film (12, 12) and wherein a fastening film (12) is positioned above the object, or a fastening film (12) is positioned above and a further fastening film (12') below the object.

7. A method according to one of the claims 1 to 6, wherein the object to be fastened is an identification carrier (10) or an identification means (31) integrated in the fastening film.

8. A method according to one of the claims 5 to 7, wherein the fastening film and/or optionally a plurality of separate objects in the form of film tapes is/are, in a sequence of a plurality of fastening steps, fastened on a plurality of objects (11) and punched out.

9. A fastening tool (1) configured for carrying out the method according to one of the claims 1 to 8, **characterized in that** a distal profile (2) of the fastening tool (1) runs linearly in a manner adapted to the object or to the fastening film.

10. A fastening tool (1) according to claim 9, wherein the profile (2) runs in a closed manner around the central region.

11. A fastening tool according to claim 9 or 10, wherein the profile (2) projects distally beyond a distal surface (4) of a tool base (5) or the fastening tool (1) is tubular and the profile (2) forms the distal face side of the tubular fastening tool (1).

12. A fastening tool according to one of the claims 9 to 11, wherein the profile (2) on the outside comprises a cutting edge (20) or a row of cutting teeth (22).

13. A fastening tool according to claim 12, wherein a pressing surface (21) is arranged on the inside of the cutting edge (20) or of the cutting teeth (22), and wherein the cutting edge (20) or the cutting teeth (22) project distally beyond the pressing surface (21).

14. A kit with a fastening tool (1) according to one of the claims 9 to 13, wherein the kit further comprises a fastening film or fastening films, with dimensions being adapted at least partly to the profile (2) of the fastening tool (1).

15. A kit according to claim 14, which further comprises an energy source, as well as a plurality of fastening tools (1), which, for the purpose of coupling to the energy source, comprise an equally equipped proximal end and different profiles (2) at the distal end.

## Revendications

1. Procédé de fixation d'un objet essentiellement plat sur la surface d'un produit en matériau poreux ou fibreux, en particulier en bois ou en matériau similaire au bois, à l'aide d'un thermoplastique liquéfiable et d'un outil de fixation (1), dans lequel
une feuille de fixation (12, 12') présente le thermoplastique,
l'objet à fixer est séparé de la feuille de fixation (12, 12') ou intégré dans la feuille de fixation,
l'outil de fixation (1) présente un profil distal (2) équipé pour amener à ce profil l'énergie nécessaire pour liquéfier localement le thermoplastique,
la feuille de fixation et éventuellement l'objet séparé sont placés sur la surface du produit,
le profil (2) de l'outil de fixation (1) est placé sur la feuille de fixation et repoussé contre la surface du produit tout en y appliquant de l'énergie jusqu'à ce qu'une quantité suffisante de thermoplastique se soit liquéfiée à travers le profil (2) et ait pénétré dans le matériau de la surface du produit pour ancrer la feuille de fixation sur ce dernier,
**caractérisé en ce que**
le profil distal (2) de l'outil de fixation (1) s'étend sur l'objet ou sur la feuille de fixation en suivant une ligne adaptée.

2. Procédé selon la revendication 1, dans lequel le profil (2) présente une forme intrinsèquement fermée.

3. Procédé selon l'une des revendications 1 ou 2, dans lequel le profil (2) déborde distalement au-delà d'une surface distale (4) d'un socle (5) d'outil ou en ce que l'outil de fixation (1) est forme tubulaire et le profil (2) forme le côté frontal distal de l'outil de fixation (1) de forme tubulaire.

4. Procédé selon l'une des revendications 1 à 3, dans lequel l'énergie est une énergie de vibration mécanique.

5. Procédé selon l'une des revendications 1 à 4, dans lequel le long du profil (2), la feuille de fixation (12, 12') et éventuellement aussi l'outil sont en outre séparés par le profil (2) de l'outil de fixation (1) .

6. Procédé selon l'une des revendications 1 à 5, dans lequel l'objet à fixer est séparé de la feuille de fixation (12, 12') et une feuille de fixation (12) est placée au-dessus de l'objet ou une feuille de fixation (12) est placée au-dessus de l'objet et une autre feuille de fixation (12') est placée en dessous de l'objet.

7. Procédé selon l'une des revendications 1 à 6, dans lequel l'objet à fixer est un support d'identification (10) ou un moyen d'identification (31) intégré dans la feuille de fixation.

8. Procédé selon l'une des revendications 5 à 7, dans lequel la feuille de fixation et/ou éventuellement plusieurs objets séparés vus en forme de ruban de feuille, sont fixés et découpés en une succession de plusieurs étapes de fixation sur plusieurs produits (11) .

9. Outil de fixation (1) configuré en vue de mettre en oeuvre le procédé selon l'une des revendications 1 à 8, **caractérisé en ce qu'**un profil distal (2) de l'outil de fixation (1) s'étend sur l'objet ou sur la feuille de fixation en suivant une ligne adaptée.

10. Outil de fixation (1) selon la revendication 9, dans lequel le profil (2) s'étend en cercle intrinsèquement fermé autour de la partie centrale.

11. Outil de fixation (1) selon les revendications 9 ou 10, dans lequel le profil (2) déborde distalement au-delà d'une surface distale (4) d'un socle (5) d'outil ou en ce que l'outil de fixation (1) est de forme tubulaire et le profil (2) forme le côté frontal distal de l'outil de fixation (1) de forme tubulaire.

12. Outil de fixation selon l'une des revendications 9 à 11, dans lequel le profil (2) présente à l'extérieur une arête coupante (20) ou une série de dents de coupe (22) .

13. Outil de fixation (1) selon la revendication 12, dans lequel une surface de poussée (21) est disposée sur le côté intérieur de l'arête coupante (20) ou en position adjacente aux dents de coupe (22), l'arête coupante (20) ou les dents de coupe (22) débordant distalement au-delà de la surface de poussée (21).

14. Trousse présentant un outil de fixation (1) selon l'une des revendications 9 à 13, la trousse présentant en outre une feuille de fixation ou plusieurs feuilles de fixation dont les dimensions sont adaptées au moins en partie au profil (2) de l'outil de fixation (1) .

15. Trousse selon la revendication 14, présentant en outre une source d'énergie ainsi que plusieurs outils de fixation (1) qui présentent des extrémités proximales identiques et des profils (2) différents aux extrémités distales en vue d'un raccordement à la source d'énergie.
